(19) Europäisches Patentamt
European Patent Office
Office européen des brevets

(11) **EP 3 317 070 B1**

(12) **EUROPÄISCHE PATENTSCHRIFT**

(45) Veröffentlichungstag und Bekanntmachung des Hinweises auf die Patenterteilung:
**25.09.2019 Patentblatt 2019/39**

(21) Anmeldenummer: **16741224.6**

(22) Anmeldetag: **24.06.2016**

(51) Int Cl.:
*B29C 44/50* *(2006.01)*  *B29C 44/60* *(2006.01)*
*B29C 48/92* *(2019.01)*  *G05D 5/03* *(2006.01)*

(86) Internationale Anmeldenummer:
**PCT/DE2016/100286**

(87) Internationale Veröffentlichungsnummer:
**WO 2017/000933 (05.01.2017 Gazette 2017/01)**

(54) **VERFAHREN UND VORRICHTUNG ZUR ERMITTLUNG EINER SCHICHTEIGENSCHAFT EINER SCHICHT IN EINEM EXTRUSIONSPROZESS**

METHOD AND DEVICE FOR DETERMINING A LAYER PROPERTY OF A LAYER IN AN EXTRUSION PROCESS

PROCÉDÉ ET DISPOSITIF DE DÉTERMINATION D'UNE PROPRIÉTÉ D'UNE COUCHE DANS UN PROCESSUS D'EXTRUSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.07.2015 DE 102015110600**

(43) Veröffentlichungstag der Anmeldung:
**09.05.2018 Patentblatt 2018/19**

(73) Patentinhaber: **INOEX GmbH**
**49324 Melle (DE)**

(72) Erfinder: **NERLING, Christoph**
**31737 Rinteln (DE)**

(74) Vertreter: **Bremer, Ulrich**
**Theaterstrasse 6**
**30159 Hannover (DE)**

(56) Entgegenhaltungen:
WO-A1-2015/074642      US-A- 3 953 739
US-A- 4 244 897       US-A- 4 329 052
US-A- 4 613 471       US-A- 5 338 765
US-A1- 2015 008 324

EP 3 317 070 B1

**Beschreibung**

Die Erfindung bezieht sich auf ein Verfahren zur Ermittlung mindestens einer Schichteigenschaft einer in ihren Eigenschaften zu ermittelnden Schicht in einem Extrusionsprozess. Hierbei kann insbesondere eine Schichteigenschaft einer Mischungsschicht, z. B. einer Schaumschicht des Extrusionsproduktes, insbesondere eines extrudierten Rohres ermittelt werden. Weiterhin werden ein Verfahren und eine Vorrichtung zur Herstellung des Extrusionsproduktes geschaffen.

In Extrusionsprozessen werden Extrusionsprodukte, insbesondere auch in einem Endlosverfahren, unter Zuführung von Kunststoff hergestellt. Als Extrusionsprodukte können u. a. Kunststoffrohre, Profile und Folien hergestellt werden. Neben Extrusionsprodukten mit durchgängigem Kunststoffmaterial sind weiterhin Extrusionsprozesse zur Herstellung von Produkten mit Mischungen zweier oder mehrerer Substanzen bekannt; diese Mischungen können insbesondere Schäume sein, bei denen ein Kunststoffmaterial aufgeschäumt wird und somit eine Mischung aus Kunststoff und einem Gas erzeugt wird. Derartige Produkte können somit ganz oder teilweise geschäumt sein. Ein Schaum kann durch physikalisches Aufschäumen mit einem Gas wie z. B. Luft oder auch chemisches Aufschäumen ausgebildet werden.

Weitere Mischungen sind z. B. faserverstärkte Kunststoffe wie GfK , bei denen Glasfasern in eine Kunststoffmatrix eingebettet werden. Weiterhin können mehrere Schichten vorliegen, die bei Messungen nicht oder nicht genau trennbar sind und sich somit in Messungen als Mischung oder schlecht trennbare Kombination darstellen.

So können Kunststoffrohre, Profile oder Folien ganz oder in einzelnen Schichten aus einer derartigen Mischung hergestellt werden.

Ein derartiger Extrusionsprozess zur Herstellung von Produkten mit gemischten Schichten ist grundsätzlich kostengünstig. Die Ausbildung der mindestens einen gemischten Schicht ist jedoch von vielen Parametern abhängig, die sich auch während eines Extrusionsprozesses ändern können.

Daher ist eine Vermessung einer zu ermittelnden Schicht, insbesondere die Ermittlung einer Schichteigenschaft einer gemischten Schicht in dem Extrusionsprodukt hilfreich, um die Eigenschaften des Kunststoff-Produktes ermitteln zu können.

Zur Ermittlung von Wanddicken von Rohren sind Ultraschallmessungen bekannt. Derartige Messungen an einer gemischten Schicht, z. B. einer Schaumschicht sind jedoch schwierig, da die unterschiedlichen Komponenten z. B. sowohl stark reflektieren als auch dämpfen und streuen können.

Weiterhin sind Wanddickenmessungen mittels Terahertzstrahlung bekannt. Zum Beispiel offenbart WO 2015/074642 A1 ein Verfahren und eine Messvorrichtung zur Vermessung von Prüfobjekten mittels Terahertzstrahlung. Schaumschichten werden im Allgemeinen jedoch nicht mit Terahertz-Strahlung vermessen, da der Brechungsindex der Terahertzstrahlung an der Schaumschicht unbestimmt ist. Die Schaumschicht ist ein Gemisch aus Luft und Kunststoff, dessen Zusammensetzung und damit dessen Brechungsindex zunächst unbekannt sind.

Die US 4,613,471 B schlägt ein System und ein Verfahren zur Einstellung der Dichte von extrudierten Schaum-Produkten vor, bei denen die Zuführmenge der der Extrusionsvorrichtung zugeführten Schmelze an der Zuführ-Pumpe ermittelt wird. Hierbei können die Pumpen-Geschwindigkeit und die Querschnitts-Dimensionen des zugeführten geschmolzenen Materials ermittelt werden. Aus dem Produkt der Dichte der ungeschäumten Schmelze, dem Zuführvolumen (Volumen pro Zeiteinheit) der ungeschäumten Schmelze und dem Zuführvolumen (Volumen pro Zeiteinheit) des extrudierten Schaummaterials kann nachfolgend der Quotient der Dichte des geschäumten Schaummaterials zu dem ungeschäumten Schaummaterial ermittelt werden. Somit kann die Zuführmenge korrigiert werden, um ein Schaumprodukt mit gewünschten Eigenschaften herzustellen.

Ein derartiges Messverfahren ermöglicht somit Korrekturen des geschäumten Extrusionsproduktes. Die Vermessung des geschäumten Materials ist jedoch im Allgemeinen aufwändig.

Die DE 10 2008 026 484 A1 betrifft ein Verfahren zur Erzeugung zweier verzögerter Pulse für eine Terahertz-Spektroskopie, bei dem ein gepulster Strahl nachfolgend geteilt wird, einer der Teilstrahlen zeitlich verzögert wird, und beide Teilstrahlen nachfolgend auf einen Zielbereich gelenkt werden. Aus dem gepulsten Strahl können somit gepulste Teilstrahlen ermittelt werden, die nachfolgend für ein Terahertz-Messverfahren, insbesondere für Laufzeitmessungen, verwendet werden können.

Die US 5,338,765 B beschreibt ein Verfahren und eine Vorrichtung zum kontinuierlichen Aufschäumen eines Polyimid-Prepolymer-Pulvers, das nicht mittels Mikrowellen-erhitzt werden kann. Hierbei wird das Polyimid-Prepolymer-Pulver gleichmäßig erhitzt, um ein kontinuierliches Schaum-Produkt von relativ gleichmäßiger Zellgröße, Dichte und Stärke zu erzeugen.

Die US 2015/0008324 A1 beschreibt eine Vorrichtung zum Messen der physikalischen Eigenschaften eines Objektes durch eine Time-Domain-Spektroskopie.

Die US 4,244,897 beschreibt ein System zur Steuerung der Dichte von produzierten Schaum-Extrusions-Materialen. Hierbei werden die Dicke und ein Basis-Gewicht ermittelt, und die berechnete Dichte mit einem Zielwert oder gewünschten Wert verglichen, um ein Fehler-Signal zu erzeugen.

Die US 3,953,739 beschreibt ein Verfahren und eine Vorrichtung zum kontinuierlichen Überwachen und Messen der Durchschnittsgröße individueller Schaum-Zellen einer Schaum-Struktur.

Auch die US 4,329,052 beschreibt ein derartiges Verfahren und eine derartige Vorrichtung.

Der vorliegenden Erfindung liegt die Aufgabe zugrunde, ein Verfahren und eine Vorrichtung zur Ermittlung einer Schichteigenschaft einer zu ermittelnden Schicht in einem Extrusionsprozess zu schaffen, die eine sichere und genaue Bestimmung ermöglichen. Weiterhin sollen ein Extrusionsverfahren und eine Extrusionsvorrichtung unter Einbeziehung eines derartigen Verfahrens geschaffen werden.

Diese Aufgabe wird durch ein Verfahren nach Anspruch 1 gelöst. Die Unteransprüche beschreiben bevorzugte Weiterbildungen. Hierbei werden weiterhin ein Verfahren und eine Vorrichtung zur Herstellung eines Extrusionsproduktes geschaffen. Die Vorrichtung ist hierbei insbesondere zur Ausführung des Verfahrens zur Herstellung vorgesehen, und das Verfahren zur Herstellung kann unter Einsatz der Vorrichtung erfolgen.

Der Erfindung liegt der Gedanke zugrunde, das Extrusionsprodukt mit der mindestens einen zu ermittelnden Schicht nach seiner Herstellung durch ein elektromagnetisches THz-Messverfahren zu untersuchen, um hieraus Messdaten über dessen Wandeigenschaften bzw. Schichteigenschaften zu erhalten. Es wird hierbei erkannt, dass aufgrund der unbekannten elektromagnetischen Eigenschaften der zu ermittelnden Schicht die elektromagnetischen Messungen noch nicht für eine weitergehende Bewertung der Schaumschicht ausreichend sind. So sind Messdaten aus einer Terahertz-Vermessung bei ganz oder teilweise gemischten, z. B. geschäumten Produkten noch nicht für eine Ermittlung z. B. einer Schichtdicke oder Wanddicke ausreichend, da der Brechungsindex eines geschäumten Materials in dem Terahertz-Messbereich von seiner Materialdichte abhängt. Bei anderen Mischsubstanzen ist entsprechend der jeweilige Anteil der Substanzen relevant.

Daher werden ergänzend zu der elektromagnetischen Vermessung Messdaten oder Messsignale aus der Materialzuführung des Extrusionsprozesses, insbesondere Daten oder Messsignale über die zugeführte Materialmenge, herangezogen. Diese Messdaten oder Messsignale werden während des Extrusionsprozesses aufgenommen und können insbesondere gravimetrisch und/oder volumetrisch gewonnen werden. Bei der besonders vorteilhaften gravimetrischen Messung kann insbesondere ein Wägeverfahren mit einer Wägevorrichtung verwendet werden, die die Zuführrate als Masse pro Zeit misst. Eine volumetrische Messung kann z. B. durch elektromagnetische Vermessung erfolgen, wenn eine spezifische Dichte des Zuführmaterials, z. B. eines Schüttgutes, bekannt ist. Weiterhin kann eine volumetrische Messung auch z. B. in dem Extruder bei der Förderung der Schmelze zur Düse erfolgen, z. B. aus der Messung einer Druckdifferenz an den Enden eines Zuführrohres bei bekannter Viskosität der Schmelze.

Die elektromagnetische Messung wird als Terahertz-Messung in einem Frequenzbereich von 0,01 THz bis 50 THz, insbesondere von 0,05 bis 20 THz, und insbesondere im Bereich von 0,1 THz bis 10 THz durchgeführt. Die Messung erfolgt unter Reflexion an Grenzschichten. Hierbei können Laufzeitmessungen vorgesehen sein.

Weiterhin können Messdaten oder Messsignale über die Abzugsgeschwindigkeit der Extrusionslinie bzw. des ausgegebenen, extrudierten Produktes erfasst werden.

Gemäß einer bevorzugten Ausbildung wird ein Brechungsindex der mindestens einen gemischten Schicht, z. B. Schaumschicht ermittelt, der zum einen direkt zur Beschreibung der zu ermittelnden Schicht bzw. eines Mischungsgrades der Schicht herangezogen werden kann. Weiterhin kann aus dem Brechungsindex der zu ermittelnden Schicht der Materialanteil der Komponenten, z. B. der Schäumungsgrad einer Schaumschicht ermittelt werden.

Erfindungsgemäß wird erkannt, dass neben Schäumen auch z. B. folgende weitere gemischte Schichten oder Mischschichten ermittelt werden können: Faserverstärkte Kunststoffe, z. B. GfK (Glasfaserverstärkte Kunststoffe), CFK (Kohlefaserverstärkte Kunststoffe), insbesondere bei grundsätzlicher Kenntnis des Brechungsindex des Fasermaterials. Weiterhin können auch z. B. schwer trennbare oder in der elektromagnetischen Messung zu unterscheidende Schichten, z. B. dünne aufeinander liegende Schichten ohne genau Trennbarkeit in z. B. einer THz-Messung, als "gemischte Schicht" mit einem mittleren Brechungsindex ermittelt werden.

Zusätzlich zu den Schichteigenschaften der zu ermittelnden Schicht können Schichteigenschaften weiterer Schichten, insbesondere durchgängiger Kunststoffschichten, ermittelt werden.

Unter einer durchgängigen Schicht oder durchgängigem Material wird hierbei eine nicht geschäumte Schicht bzw. nicht geschäumtes Material verstanden.

Gemäß weiterer Ausführungsformen können geometrische Abmessungen der Extrusionsprodukte, insbesondere Rohre, Profile, Folien oder Schläuche, zur Ermittlung der Wandeigenschaften, d. h. insbesondere eines Brechungsindex oder einer Schichtdicke, herangezogen werden; grundsätzlich können derartige Eigenschaften auch abgeschätzt werden.

Erfindungsgemäß wird weiterhin erkannt, dass die aus dem Messverfahren bzw. der Messvorrichtung ermittelten Daten direkt bei der Extrusion eingesetzt werden, so dass eine Regelung des Extrusionsverfahrens unter Einstellung oder Korrektur der Zuführmenge des mindestens einen Zuführmaterials in Abhängigkeit der Ermittlung der Schichteigenschaften erfolgen kann.

Somit sind insbesondere auch in line -Messungen oder in situ -Messungen möglich, bei denen direkt nach der Extrusion die erzeugten Extrusionsprodukte noch in der Herstellungskette (in line), z. B. noch vor einem Ablängen oder Schneiden, vermessen werden. Die Extrusionsprodukte können insbesondere auch vollumfänglich vermessen werden. In Abhängigkeit der Messung kann nachfolgend eine Regelung unter Korrektur der Zuführmenge als Stellgröße, und/oder unter Einstellung anderer Herstellungsparameter durchgeführt werden.

Somit ergeben sich einige Vorteile:

Es ist eine direkte in line-Vermessung, insbesondere in einem kontinuierlichen Vermessungs-Verfahren, möglich. Hierdurch werden z. B. gegenüber einer nachträglichen Vermessung des Gewichts bzw. der Masse eines Extrusionsproduktes schnellere Vermessungen mit weniger Aufwand und schnellere Korrekturen ermöglicht, mit einer direkten Korrektur der Prozessparameter noch während des Extrusionsprozesses erfolgen.

Weiterhin ist die Vermessung materialschonend, schnell und mit geringem Energieaufwand durchführbar.

Das Verfahren und die Vorrichtung sind insbesondere für unterschiedliche Extrusionsprodukte, die ganz oder teilweise geschäumt sind, anwendbar. Diese sind insbesondere ein- oder mehrschichtige Rohre, Folien, aber auch z. B. Profile und andere Extrusionsprodukte mit grundsätzlich beliebiger Formgebung.

Die Erfindung wird im Folgenden anhand der beiliegenden Zeichnungen an einigen Ausführungsformen näher erläutert. Hierbei wird rein beispielhaft insbesondere Schaum als gemischtes Material beschrieben, wobei auch z. B. andere Mischungen entsprechend untersucht werden können. Es zeigen:

Fig. 1     eine Extrusions-Vorrichtung zur Herstellung eines Schaumrohres mit einer Messvorrichtung gemäß einer Ausführungsform der Erfindung;

Fig. 2     den Schnitt durch eine mehrschichtige Wand eines Extrusionsproduktes mit mittlerer Schaumschicht;

Fig. 3     einen Schnitt durch ein Schaumrohr mit mittlerer Schaumschicht;

Fig. 4     ein Diagramm mit einem Messsignal;

Fig. 5     ein Flussdiagramm eines erfindungsgemäßen Verfahrens.

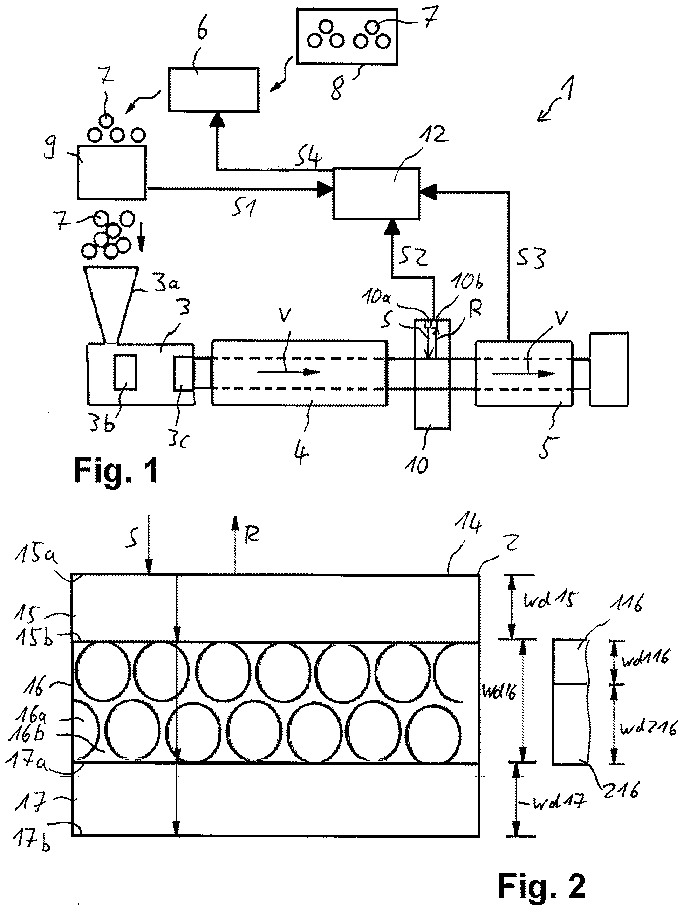

Eine Extrusions-Vorrichtung 1 zur Herstellung von Extrusionsprodukten 2, im vorliegenden Fall insbesondere von Schaumrohren 2, weist gemäß Fig. 1 einen Extruder 3, eine Kühlvorrichtung 4 und eine Abzugs- und Sägevorrichtung 5 auf. Weiterhin weist die Extrusions-Vorrichtung eine Fördereinrichtung 6 auf, die Zuführmaterial 7, z. B. Kunststoff-Granulat, Kunststoff-Pulver oder Kunststoff-Pellets, aus einem Speicher 8 fördert und über eine Wägevorrichtung 9 zu einer Einfüllöffnung 3a, z. B. einem Trichter, des Extruders 3, fördert. Die Fördereinrichtung 6 kann z. B. als einstellbare Zuführöffnung ausgebildet sein, die einen fallenden Strom des Zuführmaterials 7 durch eine entsprechende Querschnitts-Einstellung reguliert.

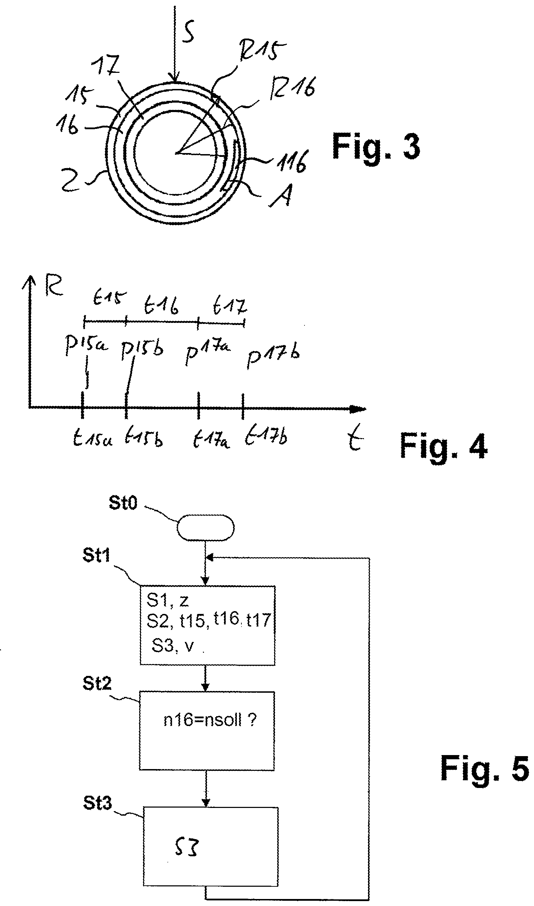

Der Extruder 3 weist weiterhin in an sich bekannter Weise in einer Einzugszone eine Schmelzeinrichtung 3b, sowie eine Düse 3c auf, die in an sich bekannter Weise aus dem aufgeschmolzenen Zuführmaterial 7 das Extrusionsprodukt, hier als Schaumrohr 2, ausgibt. Zur Ausbildung z. B. eines Schaumrohres 2 gemäß Fig. 3 mit mehreren konzentrischen Rohren kann der Extruder 3 entsprechend auch aufwändiger und/oder mit mehreren Düsen 3c ausgebildet sein.

Als Zuführmaterial 7 kann auch eine Mischung aus unterschiedlichen Zuführmaterialien, z. B. mehreren Granulaten, verwendet werden. Für eine chemische Aufschäumung können Treibmittel zugeführt werden.

Die Wägevorrichtung 9 ermittelt die Zuführrate z bzw. zeitliche Zuführmenge als Masse pro Zeit, d. h. in kg/s, und gibt ein erstes Messsignal S1 an eine Steuereinrichtung 12 aus. Das Zuführmaterial 7 wird dann vom Extruder 1 aufgenommen, geschmolzen und über seine Düse 3c als Schaumrohr 2 ausgepresst, nachfolgend in der Kühlvorrichtung 2 gekühlt, von der Abzugs- und Sägeeinrichtung 3 entsprechend abgezogen bzw. entnommen und zerteilt.

Weiterhin weist die Extrudier-Vorrichtung 1 eine Terahertz- Messvorrichtung 10 auf, die grundsätzlich an einer beliebigen Stelle hinter dem Extruder 3 vorgesehen sein kann, um das erzeugte Extrusionsprodukt 2 zu vermessen. Die Terahertz-Messvorrichtung 10 sendet Terahertz-Strahlung S, empfängt reflektierte Strahlung R und gibt gegebenenfalls nach einer teilweisen Auswertung zweite Messsignale S2 an die Steuereinrichtung 12. Hierbei kann das geförderte Schaumrohr 2 vollumfänglich noch in der Extrusionsvorrichtung 1 ohne Drehen und Wenden, vermessen werden. Die Terahertz-Messvorrichtung 10 weist einen Sender 10a und einen Empfänger 10b auf, die z. B. um das Extrusionsprodukt 2 rotieren, um dieses vollumfänglich zu vermessen.

Die Abzugseinrichtung 5 liefert ein drittes Messsignal S3 über eine Abzugsgeschwindigkeit v des Extrusionsproduktes 2 an die Steuereinrichtung 12. Weiterhin gibt die Steuereinrichtung 12 ein Mengen-Einstellsignal S4 an die Fördereinrichtung 6 aus, um hierdurch die Zuführrate z durch z. B. Einstellung eines Förder- Querschnitts oder auch einer Förderschnecke, einzustellen. Weiterhin kann die Steuereinrichtung 12 auch Messsignale des Extruders 3, z. B.

bezüglich Temperatur, oder auch ein weiteres Geschwindigkeitssignal, z. B. einer Schmelzpumpe, als weiteres Messsignal aufnehmen.

Fig. 2 zeigt eine Wand 14 des Extrusionsproduktes 2, z. B. eine Wand 14 eines Schaumrohrs, das in Fig. 3 als Extrusionsprodukt dargestellt ist. Die Wand 14 weist eine äußere Wandschicht 15, eine mittlere Schaumschicht 16 und eine innere Wandschicht 17 auf. Zur Veranschaulichung sind in Fig. 2 die Schichten 15, 16, 17 eben dargestellt; Fig. 3 zeigt die Ausführungsform eines Schaumrohrs 2, bei der diese Schichten entsprechend ringförmig ausgebildet sind.

Von der Terahertz-Messvorrichtung 10 ausgesandte Terahertz-Strahlung S fällt gemäß Fig. 2 von außen senkrecht auf die Schichten 15, 16, 17, die Brechungsindizes n15, n16, n17 aufweisen. Bei einem runden Schaumrohr 2 fällt die Strahlung S gemäß Fig. 3 über den Umfang verteilt radial ein. Die Strahlung S wird an Grenzschichten, bei denen sich der Brechungsindex n ändert, jeweils gemäß dem Snellius'schen Brechungsgesetz teilweise reflektiert. Somit wird die Strahlung S an der Außenseite 15a und der Innenseite 15b der ersten Schicht 15 reflektiert, an der inneren Grenzfläche 15b entsprechend der Änderung des Brechungsindex von n15 auf n16 reflektiert. In der mittleren Schaumschicht 16 liegt ein Brechungsindex n16 vor, der sich als Mittelung zwischen dem Brechungsindex n0 der Luft mit n0 = 1 und n15 = n17 ≈ 1,5 ergibt. Somit liegt n16 zwischen n0 = 1 und n15 = n16 ≈ 1,5, je nach Materialanteil in der mittleren Schaumschicht 16.

In Fig. 2 ist die mittlere Schaumschicht 16 schematisch gezeigt; tatsächlich liegt eine Vielzahl von Blasen 16a bzw. Poren mit dazwischenliegenden Stegen 16b vor. Die Strahlung S durchquert somit die Schaumschicht 16 und wird wiederum an den Grenzschichten 17a und 17b der inneren Wandschicht 17 reflektiert.

Bei einem reinen Schaumrohr, das nur eine Schaumschicht 16 aufweist, werden entsprechend Übergänge der Schaumschicht 16 zur Luft gemessen.

Fig. 4 zeigt vereinfacht ein Messdiagramm als Reflexions-Signal der reflektierten Strahlung R. Die Terahertz-Strahlung S wird vom Sender gepulst ausgesendet, so dass in der reflektierten Strahlung R eine Laufzeitmessung der Reflexions-Peaks an den Grenzflächen möglich ist. Gemäß Fig. 5 kann somit bei der Laufzeitmessung eines Messpulses z. B. ein Messsignal mit den vier Peaks p15a, p15b, p17a, p17b, entsprechend den Grenzflächen 15a, 15b, 17a, 17b, aufgenommen werden.

Bei der nachfolgenden Berechnung ist zu berücksichtigen, dass z. B. für die Reflexion an der Grenzfläche 15b die Strahlung S die Schichtdicke d15 der äußeren Schicht 15 zweimal durchquert, nämlich von der ersten Grenzfläche 15a bis 15b, und nach Reflexion zurück zu 15a.

Die Wanddicke wd eines Rohres, z. B. die Wanddicke wd15 des äußeren Rohres 15 kann aus der ermittelten Zeitdifferenz t gemäß folgender Formel ermittelt werden:

$$wd = \frac{t*c}{2*n} \qquad \text{(GL1)}$$

mit c= Lichtgeschwindigkeit im Vakuum, n0 = Brechungsindex.

Somit können die Wanddicken wd15 und wd 17 der durchgängigen Rohre 15 und 17 ermittelt werden, mit n= 1,5.

Auch für die mittlere Schaumschicht 16 gilt

$$wd_{16} = \frac{t_{16}*c}{2*n_{16}} \qquad \text{(GL2)},$$

mit unbekanntem n16.

Hierbei ist der Brechungsindex n16 ein charakteristischer Wert zur Kennzeichnung der Schaumschicht 16, der zu ermitteln ist.

Zur Ermittlung des Brechungsindex n16 der Schaumschicht 16 wird wie folgt angesetzt:
Die Schaumschicht 16 wird zunächst als Mittelung oder "Summe" einer - fiktiven - Kunststoffschicht 116 mit Schichtdicke wd116 und einer - fiktiven - Luftschicht 216 mit Schichtdicke wd216 angesetzt, wie in Fig. 2 rechts angedeutet. Es gilt

$$t_{16} = t_{116} + t_{216}$$
$$t_{216} = t_{16} - t_{116}$$
$$t_{116} = 2 * wd_{116} * n_{116}/c \qquad \text{(GL3)}$$

mit n116 = n15=n17 = 1,5 und

t16, t116, t216 Laufzeiten in den Schichten 16, 116, 216.

Hierbei wird die Schichtdicke wd116 über die als erstes Messsignal S1 ermittelte Zuführrate z der Dimension Masse pro Zeit bzw. kg/s und weiterhin dem dritten Messsignal S3 der Abzugsgeschwindigkeit v ermittelt. Zunächst kann nachfolgend ein Längengewicht Lg der Dimension Masse pro Längeneinheit, d. h. kg/m, ermittelt werden, d. h. das Längengewicht Lg wird ermittelt als Quotient der Zuführrate z und der Abzugsgeschwindigkeit v bzw. des Schaumrohrs (Extrusionsproduktes) 2,

$$d. h. \quad Lg = z/v. \quad (GL4)$$

Die fiktive Materialschicht 116 kann z. B. an dem - bekannten - Außendurchmesser R16 der Schaumschicht 16, d. h. dem Innendurchmesser des äußeren Rohres 15 angesetzt werden. Der gesamte Rohrdurchmesser D = 2 x R15, mit R15 Außenradius der äußeren Schicht (äußeres Rohr) 15, ist bekannt; R15 kann z. B. optisch durch Bilderfassung des Extrusionsproduktes 2, oder durch Kenntnis der Austrittsöffnung der Düse 3c ermittelt werden. Aus R15 und der aus der Laufzeitmessung ermittelten Schichtdicke wd15 der äußeren Schicht 15 ergibt sich somit der Außenradius R16 der Schaumschicht 16 als R16 = R15 -wd15.

Nachfolgend kann aus dem Längengewicht Lg und der Dichte p116 des durchgängigen Kunststoffmaterials die in Fig. 3 angedeutete Querschnittsfläche A der gesamten ringförmigen Schicht 116 durch Quotientenbildung ermittelt werden als:

$$A = Lg/ \rho. \quad (GL5)$$

Somit sind die Querschnittsfläche A und weiterhin der Außenradius R16 der ringförmigen Schaumschicht 16 bekannt. Es gilt

$$A \approx \pi * R16 * wd116 \quad (GL6)$$

Hieraus wird somit wd116 bestimmt.
Aus

$$wd16 = wd116 + wd216 \quad (GL7)$$

und Gl 2 folgt somit:

$$n_{16} = \frac{t_{16}*c}{2*wd_{16}} = \frac{t_{16}*c}{2*wd_{116}(1-n_{116})+t_{16}*c} \quad (GL8)$$

Aus dem Brechungsindex n16 kann mit Gleichung GL2 auch die Wanddicke wd16 der Schaumschicht 16 berechnet bzw. ermittelt werden.

Der Brechungsindex n16 der Schaumschicht 16 kann somit als materialspezifische Eigenschaft der Schaumschicht 16 angesehen werden und direkt zur Regelung der Zuführrate z dienen. Der Brechungsindex n16 kann somit mit einem Brechungsindex nsoll verglichen werden. Hierbei zeigt sich, dass bereits der Brechungsindex n16 eine gute Vergleichsgröße für Regelungen der Zuführrate z darstellt.

Somit können eine Regelung und somit ein Verfahren zum Herstellen eines Extrusionsproduktes 2 geschaffen werden, bei denen aus der Ermittlung des Brechungsindex n16 der Schaumschicht 16 nachfolgend von der Steuereinrichtung 12 durch Ausgabe von Mengen-Einstellsignalen S3 an die Fördereinrichtung 6 eine Regelung der Materialzufuhr und somit eine qualitativ sichere Ausbildung von Extrusionsprodukten wie dem Schaumrohr 2 möglich ist.

Statt des Brechungsindex n16 der Schaumschicht 16 kann auch eine andere materialspezifische Größe ermittelt werden, z. B. ein Schäumungsgrad sg, der als volumenbezogener Anteil des Kunststoffmaterials in der Schaumschicht 16 ermittelt wird. Dieser relative Wert entspricht somit auch dem relativen Flächenwert der fiktiven Material-Schicht 216 in der Schicht 16.

Auch reine Schaumrohre, d. h. allein eine Schaumschicht 16 ohne die weiteren Schichten 15 und 17 können entsprechend hergestellt werden. In einem derartigen Fall kann der Außendurchmesser D16 = 2 x R16 direkt elektromagnetisch bzw. optisch oder auch aus Kenntnis des Außendurchmessers der Düse 3c ermittelt werden.

Bei Herstellung von flächigen, d. h. nicht runden Produkten, kann entsprechend eine Terahertz-Messvorrichtung gewählt werden, die direkt senkrecht auf das Extrusionsprodukt 2 einstrahlt.

Das erfindungsgemäße Verfahren weist somit gemäß Fig. 5 folgende Schritte auf: Nach dem Start in Schritt St0 werden nachfolgend in Schritt St1 die Signale aufgenommen, d. h. das erste Messsignal S1 der Zuführmenge z (Zuführmengen-Messsignal), das zweite Messsignal S2 der elektromagnetischen Messung, d.h. der Laufzeiten t16, t15, t17, das dritte Messsignal S3 der Abzugsgeschwindigkeit v. Gegebenenfalls kann die Steuereinrichtung 12 hier noch weitere Messsignale, z. B. des Extruders 3, aufnehmen. Weiterhin greift die Steuereinrichtung 12 auf bekannte materialspezifische Daten und Gleichungen eines internen oder externen Speichers 13 zurück.

Nachfolgend ermittelt die Steuereinrichtung 12 somit gemäß den obigen Gleichungen in Schritt St2 den Brechungsindex n16 der Schaumschicht 16 und vergleicht z. B. mit einem Sollwert nsoll, ggf. wird auch ein Schäumungsgrad oder die Wanddicke wd16 der Schaumschicht 16 ermittelt..

In dem nachfolgenden Regelungsschritt St3 werden dann Mengeneinstell-Signale S3 ermittelt und an die Fördereinrichtung 6 ausgegeben,

nachfolgend wird das Verfahren wiederum vor Schritt St1 zurückgesetzt.

Statt Gas bzw. Luft als zweite Substanz der gemischten Schicht kann auch z. B. ein Fasermaterial mit bekanntem Brechungsindex (statt n0=1), oder eine andere Mischung zweier Substanzen herangezogen werden.

**Patentansprüche**

1. Verfahren zur Ermittlung mindestens einer Schichteigenschaft (n16, wd16) einer in ihrer mindestens einen Eigenschaft zu ermittelnden Schicht (16) in einem Extrusionsprozess, bei dem ein Zuführmaterial (7) zumindest teilweise gemischt oder überlagert wird und ein Extrusionsprodukt (2) mit der zu ermittelnden Schicht (16) ausgegeben wird, mit mindestens folgenden Schritten:

   a) Bestrahlung des Extrusionsproduktes (2) mit Terahertz-Strahlung (S) in einem Frequenzbereich von 0,01 bis 50 THz,
   b) elektromagnetische Messung zumindest einer durch die zu ermittelnde Schicht (16) gelangten Strahlung (R),
   c) Messung mindestens einer Zuführrate (z) oder Zuführmenge des Zuführmaterials (7), und
   d) Ermittlung mindestens einer Schichteigenschaft (n16, wd16) der zu ermittelnden Schicht (16) aus der gemessenen Zuführmenge (z) und der elektromagnetischen Messung,
   wobei eine Reflexionsmessung an mindestens einer Grenzschicht (15a, 15b, 17a, 17b) des Extrusionsproduktes (2) ausgeführt wird.

2. Verfahren nach Anspruch 1, **dadurch gekennzeichnet, dass** in dem Extrusionsprozess das Extrusionsprodukt (2) aus einem Kunststoffmaterial ausgebildet wird und die mindestens eine zu ermittelnde Schicht (16) aus gemischtem Kunststoff ausgebildet wird, der mit mindestens zwei Substanzen aufweist.

3. Verfahren nach Anspruch 2, **dadurch gekennzeichnet, dass** als zu ermittelnde Schicht eine Schaumschicht (16) untersucht wird, die bei der Extrusion aus einem Kunststoffmaterial mit einem Gas ausgebildet wird.

4. Verfahren nach einem der vorherigen Ansprüche, **dadurch gekennzeichnet, dass** die Reflexionsmessung an mindestens einer Grenzschicht (15b, 17a) der zu ermittelnden Schicht (16) ausgeführt wird, und eine Laufzeitmessung unter Ermittlung mindestens einer Laufzeit (t15, t16, t17) der Terahertz-Strahlung (S) in mindestens einer Schicht (15, 16, 17) des Extrusionsproduktes (2) durchgeführt wird.

5. Verfahren nach einem der vorherigen Ansprüche, **dadurch gekennzeichnet, dass** das Extrusionsprodukt (2) während der Förderung unter relativer Verstellung des Extrusionsproduktes (2) in seiner Förderrichtung, vorzugsweise ohne Drehung des Extrusionsproduktes (2), elektromagnetisch vermessen wird.

6. Verfahren nach einem der vorherigen Ansprüche, **dadurch gekennzeichnet, dass** die Zuführrate (z) gravimetrisch und/oder unter Messung einer Zuführmasse pro Zeit, z. B. mittels einer Wägevorrichtung (9), und/oder unter Messung eines Zuführvolumens pro Zeit gemessen wird.

7. Verfahren nach einem der vorherigen Ansprüche, **dadurch gekennzeichnet, dass** weiterhin eine Abzugsgeschwindigkeit (v) des Extrusionsproduktes (2) ermittelt und zur Ermittlung der mindestens einen Schichteigenschaft (n16, wd16) herangezogen wird.

8. Verfahren nach Anspruch 7, **dadurch gekennzeichnet, dass** aus der Abzugsgeschwindigkeit (v) und der Zuführrate (z) eine Querschnittsfläche (A) der zu ermittelnden Schicht (16) und/oder einer fiktiven Materie-Teilschicht (116) der zu ermittelnden Schicht (16), insbesondere einer aus zwei Substanzen gemischten Schicht (16), ermittelt wird.

9. Verfahren nach Anspruch 8, **dadurch gekennzeichnet, dass** die gemischte Schicht (16) mit ihrer Schichtdicke (wd16) ermittelt wird als Summe oder Überlagerung einer fiktiven durchgängigen Materialschicht (116) einer ersten Kunststoffkomponente mit einer ersten Teil-Wanddicke (wd116) und einer fiktiven zweiten Schicht, z. B. Gasschicht (216), mit einer zweiten Teil-Wanddicke (wd216), wobei die beiden Teil- Wanddicken (wd116, wd216) zusammen die Wanddicke (wd16) der gemischten Schicht (16) bilden.

10. Verfahren nach einem der vorherigen Ansprüche, **dadurch gekennzeichnet, dass** als Schichteigenschaft der gemischten Schicht (16) ein Brechungsindex (n16) und/oder eine Wanddicke (wd16) ermittelt wird.

11. Verfahren nach einem der vorherigen Ansprüche, **dadurch gekennzeichnet, dass** bei der Ermittlung der Schichteigenschaft (n16, wd16) weiterhin mindestens eine Abmessung, z. B. ein Durchmesser (D), des Extrusionsproduktes (2) oder einer Schicht des Extrusionsproduktes (2) einbezogen wird.

12. Verfahren zur Herstellung eines Extrusionsproduktes (2) aus einem Kunststoffmaterial, bei dem

   - mindestens ein Zuführmaterial (7) einem Extruder (3) kontinuierlich zugeführt und zumindest teilweise aufgeschäumt wird, und ein Extrusionsprodukt (2) fortlaufend extrudiert und abgezogen wird, wobei das Extrusionsprodukt (2) mindestens eine zu ermittelnde Schicht (16) enthält,
   - mindestens eine Schichteigenschaft (n16, wd16) der zu ermittelnden Schicht (16) mit einem Verfahren nach einem der vorherigen Ansprüche ermittelt wird, und
   - in Abhängigkeit der mindestens einen ermittelten Schichteigenschaft (n16, wd16) die Zuführrate (z) oder Zuführmenge des Zuführmaterials (7) eingestellt wird zur Regelung der mindestens einen Schichteigenschaft (n16, wd16).

13. Verfahren nach Anspruch 12, **dadurch gekennzeichnet, dass** das Zuführmaterial (7) als Schüttgut, z. B. Granulat oder Pulver, zugeführt wird, und
das Extrusionsprodukt (2) ein Rohr mit mindestens einer gemischten Schicht, z. B. einer Schaumschicht (16) oder faserverstärkten Schicht ist, z. B. mit einem durchgängigen äußeren Rohr (15) und einem durchgängigen innerem Rohr (17) und einer dazwischen ausgebildeten gemischten Schicht (16).

14. Vorrichtung (1) zum Herstellen eines Extrusionsproduktes (2), wobei die Vorrichtung (50) mindestens aufweist:

   eine Fördereinrichtung (6) zur Förderung eines Zuführmaterials (7),
   einen Extruder (3) zur Aufnahme des Zuführmaterials (7), mit einer Extrusions-Düse (3c) zur kontinuierlichen Ausgabe des Extrusionsproduktes (2),
   eine Abzugs- und Trenneinrichtung (5) zum Abziehen oder Fördern des von dem Extruder (3) ausgegebenen Extrusionsproduktes (2),
   eine elektromagnetische Messvorrichtung (10) zur elektromagnetischen Vermessung des Extrusionsproduktes (2) während der Förderung aus dem Extruder (3) unter Messung mindestens einer Schichteigenschaft (n16, wd16) und Erzeugung eines zweiten Messsignals (S2),
   eine Zuführmengen-Messeinrichtung (9) zur Messung einer Zuführrate (z) oder Zuführmenge des zugeführten Zuführmaterials (7) und Ausgabe eines ersten Messsignals (S1),
   eine Steuereinrichtung (12) zur Aufnahme eines ersten Messsignals (S1) der Zuführmengen-Messeinrichtung (9) und des zweiten Messsignals (S2) der elektromagnetischen Messvorrichtung (10) und Ausgabe eines Mengen-Einstellsignals (S3) an die Fördereinrichtung (6), zur Regelung der mindestens einen Schichteigenschaft (n16, wd16) unter Messung der beiden Messsignale (S1, S2) und Einstellung der Zuführmenge (z),
   wobei die elektromagnetische Messvorrichtung (10) die Messung durchführt unter Bestrahlung des Extrusionsproduktes (2) mit Terahertz-Strahlung (S) in einem Frequenzbereich von 0,01 bis 50 THz, und
   elektromagnetische Messung zumindest einer durch eine zu ermittelnde Schicht (16) gelangten Strahlung (R), wobei die Messung unter Reflexion an Grenzschichten (15a, 15b, 17a, 17b) des Extrusionsproduktes (2) erfolgt, wobei die Steuereinrichtung (12) die mindestens eine Schichteigenschaft (n16, wd16) der zu ermittelnden Schicht (16) aus der gemessenen Zuführmenge (z) und der elektromagnetischen Messung, ermittelt.

**Claims**

1. Method for determining at least one layer property (n16, wd16) of a layer (16) to be determined in at least one property in an extrusion process in which a feed material (7) is at least partially mixed and coated and an extrusion product (2) is produced with the layer (16) to be determined, with the following steps at a minimum:

    a) Irradiation of the extrusion product (2) with terahertz radiation (S) in a frequency range of 0.01 to 50 THz,
    b) Electromagnetic measurement of at least one radiation (R) having passed through the layer (16) to be determined,
    c) Measurement of at least one feed rate (z) or feed quantity of the feed material (7), and
    d) Determination of at least one layer property (n16, wd16) of the layer (16) to be determined from the measured feed quantity (z) and electromagnetic measurement,
    whereby a reflexion measurement is performed on at least one boundary layer (15a, 15b, 17a, 17b) of the extrusion product (2).

2. Method according to claim 1, **characterised in that** the extrusion product (2) is formed of a plastic material in the extrusion process and minimum of one layer (16) to be determined is formed of mixed plastic having at least two substances.

3. Method according to claim 2, **characterised in that** a foam layer (16) is investigated as the layer to be determined, which was formed in extrusion from a plastic material with a gas.

4. Method according to any one of the previous claims, **characterised in that** the reflection measurement is performed on at least one boundary layer (15b, 17a) of the layer (16) to be determined, and a travel-time measurement determining at least one travel-time (t15, t16, t17) of terahertz radiation (S) is performed on at least one layer (15, 16, 17) of the extrusion product (2).

5. Method according to any one of the previous claims, **characterised in that** the extrusion product (2) is gauged electromagnetically during transportation through relative displacement of the extrusion product (2), preferably without turning the extrusion product (2).

6. Method according to any one of the previous claims, **characterised in that** the feed rate (z) is measured gravimetrically and/or by measuring a feed mass per unit of time, e.g. using a weighing device (9), and/or measuring a feed volume per unit of time.

7. Method according to any one of the previous claims, **characterised in that** a haul-off speed (v) is also determined for the extrusion product (2) and is used to determine at least one layer property (n16, wd16).

8. Method according to claim 7, **characterised in that** an average cross-section (A) of the layer (16) to be determined or a hypothetical material part layer (116) of the layer (16) to be determined, particularly a layer consisting of two substances (16), is determined using the haul-off speed (v) and the feed rate (z).

9. Method according to claim 8, **characterised in that** the mixed layer (16) with its wall thickness (wd16) is determined as the aggregate or overlay of a hypothetical material layer throughout (116) of an initial plastic component with an initial part wall thickness (wd116) and a hypothetical second layer, such as a gas layer (216), with a second part wall thickness (wd216), whereby both part wall thicknesses (wd116, wd216) together form the wall thickness (wd16) of the mixed layer (16).

10. Method according to any one of the previous claims, **characterised in that** a refractive index (n16) and/or a wall thickness (wd16) is determined as a layer property of the mixed layer (16).

11. Method according to any one of the previous claims, **characterised in that** at least one measurement, e.g. a diameter (D), of the extrusion product (2) or a layer of the extrusion product (2) is involved in determining the layer property (n16, wd16).

12. Method for the production of an extrusion product (2) from a plastic material, wherein

    - At least one feed material (7) is continually fed into an extruder (3) and at least partially foamed, and an extrusion product (2) is constantly extruded and removed, whereby the extrusion product (2) contains at least one layer (16) to be determined,
- At least one layer property (n16, wd16) of the layer (16) to be determined is determined using a method from one of the previous claims, and
- Based on the minimum of one determined layer property (n16, wd16), the feed rate (z) or feed quantity of the feed material (7) is adjusted to regulate at least one layer property (n16, wd16).

**13.** Method according to claim 12, **characterised in that** the feed material (7) is fed in bulk solids, e.g. granules or powder, and

The extrusion product (2) is a pipe with at least one mixed layer, e.g. a foam layer (16) or fibre-reinforced layer, e.g. with an outer pipe (15) throughout and an inner pipe (17) throughout and a mixed layer (16) formed between them.

**14.** Device (1) for the production of an extrusion product (2), whereby the device (50) [*sic*] has at a minimum:

- one conveying device (6) for the transportation of a feed material (7), an extruder (3) for receiving the feed material (7), with an extrusion nozzle (3c) for continuous output of the extrusion product (2),
a removal and sorting device (5) for removing or transporting the extrusion product (2) produced by the extruder (3),
an electromagnetic measurement device (10) for electromagnetically gauging the extrusion product (2) during transportation from the extruder (3) while measuring at least one layer property (n16, wd16) and producing a second measurement signal (S2),
a feed quantity measurement device (9) for measuring a feed rate (z) or feed quantity of the feed material (7) supplied and the output of a first measurement signal (S1),
a control device (12) for receiving a first measurement signal (S1) from the feed quantity measurement device (9) and the second measurement signal (S2) from the electromagnetic measurement device (10) the output of a quantity adjustment signal (S3) to the conveying device (6), for regulating the minimum of one layer property to be determined (n16, wd16) by measuring both measurement signals (S1, S2) and adjusting the feed quantity (z),
whereby the electromagnetic measurement device (10) performs the measurement by irradiating the extrusion product (2) with terahertz radiation (S) in a frequency range of 0.01 to 50 THz, and electromagnetic measurement of at least one radiation (R) of at least one layer (16) to be determined, whereby the measurement takes place by reflection on boundary layers (15a, 15b, 17a, 17b) of the extrusion product (2),
whereby the control device (12) determines the minimum of one layer property (n16, wd16) of the layer (16) to be determined based on the measured feed quantity (z) and the electromagnetic measurement.

## Revendications

**1.** Procédé de détermination d'au moins une propriété de couche (n16, wd16) d'une couche (16), dont il convient de déterminer au moins une propriété, lors d'un process d'extrusion au cours duquel un matériau d'alimentation (7) est au moins en partie mélangé ou superposé et un produit d'extrusion (2) est expulsé avec la couche (16) à déterminer,
avec au minimum les étapes suivantes :

a) irradiation du produit d'extrusion (2) par un rayonnement térahertz (S) dans une plage de fréquences de 0,01 à 50 THz,
b) mesure électromagnétique d'au moins un rayonnement (R) traversant la couche (16) à déterminer,
c) mesure d'au moins un débit d'alimentation (z) ou quantité d'alimentation du matériau d'alimentation (7), et
d) détermination d'au moins une propriété de couche (n16, wd16) de la couche à déterminer (16) à partir de la quantité d'alimentation (z) mesurée et de la mesure électromagnétique,
une mesure par réflexion étant réalisée au moins au niveau d'une couche limitrophe (15a, 15b, 17a, 17b) du produit d'extrusion (2).

**2.** Procédé selon la revendication 1, **caractérisé en ce que** le produit d'extrusion (2) est constitué d'un matériau synthétique dans le process d'extrusion et **en ce que** l'une au moins des couches à déterminer (16) est constituée d'un mélange de matériaux synthétiques de deux substances au minimum.

**3.** Procédé selon la revendication 2, **caractérisé en ce que,** en guise de couche à déterminer, est étudiée une couche de mousse (16) constituée, lors de l'extrusion, d'un matériau synthétique associé à un gaz.

4. Procédé selon l'une des revendications précédentes, **caractérisé en ce que** la mesure par réflexion est effectuée au moins au niveau d'une couche limitrophe (15b, 17a) de la couche à déterminer (16), et **en ce qu'**une mesure de la durée est effectuée en déterminant au minimum une durée (t15, t16, t17) du rayonnement térahertz (S) dans au moins une couche (15, 16, 17) du produit d'extrusion (2).

5. Procédé selon l'une des revendications précédentes, **caractérisé en ce que** le produit d'extrusion (2) est mesuré par procédé électromagnétique pendant l'acheminement accompagné d'un déplacement relatif du produit d'extrusion (2) dans la direction de son acheminement, de préférence sans étirement du produit d'extrusion (2).

6. Procédé selon l'une des revendications précédentes, **caractérisé en ce que** le débit d'alimentation (z) est mesuré par gravimétrie et/ou par la mesure d'une masse d'alimentation par unité de temps, p. ex. au moyen d'un dispositif de pesage (9) et/ou par la mesure d'un volume d'alimentation par unité de temps.

7. Procédé selon l'une des revendications précédentes, **caractérisé en ce que** la vitesse d'extraction (v) du produit d'extrusion (2) est également déterminée et utilisée pour déterminer au moins une propriété de couche (n16, wd16).

8. Procédé selon la revendication 7, **caractérisé en ce qu'**on détermine à partir de la vitesse d'extraction (v) et du débit d'alimentation (z), une surface de section (A) de la couche à déterminer (16) et/ou d'une couche partielle (116) fictive du matériau de la couche à déterminer (16), notamment d'une couche (16) composée d'un mélange de deux substances.

9. Procédé selon la revendication 8, **caractérisé en ce que** la couche (16) mélangée est déterminée par son épaisseur de couche (wd16) en tant que somme ou superposition d'une couche du matériau (116) fictive continue d'un premier composant en matériau synthétique d'une première épaisseur de paroi partielle (wd116) et d'une seconde couche fictive, p. ex. une couche de gaz (216), d'une seconde épaisseur de paroi partielle (wd216), les deux épaisseurs de paroi partielle (wd116, wd216) constituant ensemble l'épaisseur de paroi (wd16) de la couche (16) mélangée.

10. Procédé selon l'une des revendications précédentes, **caractérisé en ce qu'**un indice de réfraction (n16) et/ou une épaisseur de paroi (wd16) est déterminé en tant que propriété de couche de la couche (16) mélangée.

11. Procédé selon l'une des revendications précédentes, **caractérisé en ce que,** lors de la détermination de la propriété de couche (n16, wd16), est également intégrée au moins une cote, p. ex. un diamètre (D), du produit d'extrusion (2) ou d'une couche du produit d'extrusion (2).

12. Procédé de fabrication d'un produit d'extrusion (2) à partir d'un matériau synthétique au cours duquel :

- au minimum un matériau d'alimentation (7) est acheminé en continu vers une extrudeuse (3) et est au moins en partie moussé, et un produit d'extrusion (2) est d'extrusion et extrait en continu, le produit d'extrusion (2) contenant au minimum une couche (16) à déterminer,
- au minimum une propriété de couche (n16, wd16) de la couche à déterminer (16) est déterminée au moyen d'un procédé selon l'une des revendications précédentes, et
- en relation avec au moins l'une des propriétés de couche (n16, wd16) déterminée, le débit d'alimentation (z) ou la quantité d'alimentation du matériau d'alimentation (7) est paramétré pour réguler au moins l'une des propriétés de couche (n16, wd16).

13. Procédé selon la revendication 12, **caractérisé en ce que** le matériau d'alimentation (7) est acheminé sous forme de produit en vrac, p. ex. granulat ou poudre, et **en ce que** le produit d'extrusion (2) est un tube avec au minimum une couche mélangée, p. ex. une couche de mousse (16) ou une couche renforcée aux fibres de verre, p. ex. avec un tube extérieur continu (15) et un tube intérieur continu (17) et une couche mélangée (16) constituée entre les deux.

14. Dispositif (1) de fabrication d'un produit d'extrusion (2), le dispositif (50) présentant au minimum :

un dispositif d'alimentation (6) pour l'acheminement d'un matériau d'alimentation (7),
une extrudeuse (3), pour recevoir le matériau d'alimentation (7), munie d'une buse d'extrusion (3c) pour la fourniture en continu du produit d'extrusion (2),

un dispositif d'extraction et de séparation (5) pour extraire ou acheminer le produit d'extrusion (2) expulsé par l'extrudeuse (3),

un dispositif de mesure électromagnétique (10) pour la mesure électromagnétique du produit d'extrusion (2) pendant son acheminement hors de l'extrudeuse (3) par la mesure d'au minimum une propriété de couche (n16, wd16) et la création d'un deuxième signal de mesure (S2),

un dispositif de mesure (9) de la quantité d'alimentation pour mesurer un débit d'alimentation (z) ou une quantité d'alimentation du matériau d'alimentation (7) acheminé et délivrer un premier signal de mesure (S1),

un dispositif de commande (12) pour recevoir un premier signal de mesure (S1) du dispositif de mesure (9) de la quantité d'alimentation et du deuxième signal de mesure (S2) du dispositif de mesure électromagnétique (10) et délivrer un signal de réglage (S3) de la quantité au dispositif d'alimentation (6), pour réguler au moins l'une des propriétés de couche (n16, wd16) en mesurant les deux signaux de mesure (S1, S2) et en réglant le débit d'alimentation (z),

le dispositif de mesure électromagnétique (10) effectuant la mesure par irradiation du produit d'extrusion (2) par un rayonnement térahertz (S) dans une plage de fréquences de 0,01 à 50 THz et la mesure électromagnétique d'au moins un rayonnement (R) traversant la couche (16) à déterminer, la mesure par réflexion étant réalisée au niveau des couches limitrophes (15a, 15b, 17a, 17b) du produit d'extrusion (2),

le dispositif de commande (12) déterminant au moins l'une des propriétés de couche (n16, wd16) de la couche (16) à déterminer à partir du débit d'alimentation (z) mesuré et de la mesure électromagnétique.

Fig. 1

Fig. 2

Fig. 3

Fig. 4

Fig. 5

St0

St1
S1, z
S2, t15, t16, t17
S3, v

St2
n16=nsoll ?

St3
S3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2015074642 A1
- US 4613471 B
- DE 102008026484 A1
- US 5338765 B
- US 20150008324 A1
- US 4244897 A
- US 3953739 A
- US 4329052 A